# EUROPEAN PATENT SPECIFICATION

(11) **EP 4 350 324 B1**
(45) Date of publication and mention of the grant of the patent: **05.08.2026**
(21) Application number: 22382930.0
(22) Date of filing: 05.10.2022
(51) Int. Cl.: G01N 3/04, G01N 3/18

(54) **DEVICE AND METHOD FOR TESTING A MATERIAL UNDER MECHANICAL STRESS IN CRYOGENIC CONDITIONS**
VORRICHTUNG UND VERFAHREN ZUR PRÜFUNG EINES MECHANISCH BELASTETEN WERKSTOFFS UNTER KRYOGENEN BEDINGUNGEN
DISPOSITIF ET PROCÉDÉ DE CONTRÔLE D'UN MATÉRIAU SOUS CONTRAINTE MÉCANIQUE DANS DES CONDITIONS CRYOGÉNIQUES

(43) Date of publication of application: 10.04.2024
(73) Proprietor: Airbus Operations S.L.U., 28906 Getafe, Madrid (ES)
(72) Inventor: Vázquez Castro, Jesús Javier, 28906 Madrid (ES); Nogueroles Viñes, Pedro, 28906 Madrid (ES); López Romano, Bernardo, 28906 Madrid (ES); Perez Pastor, Augusto, 28906 Madrid (ES); Calero Casanova, Alvaro, 28906 Getafe (ES); Martín Isabel, Julian, 28906 Madrid (ES); Delgado Labrandero, Sofia, 28906 Madrid (ES)

(56) References cited:
- CN-A- 103 234 817
- CN-U- 206 832 582
- KR-B1- 101 399 891
- SU-A1- 1 359 708
- SU-A1- 1 497 484

## Description

The invention relates to a device and a method for testing a material in specific conditions, in particular in conditions of tension combined in some instances with low temperature conditions. More particularly, the invention relates to a device and method allowing evaluate the sensitivity to micro-cracking of composite flat samples at cryogenic temperatures.

The use of di-hydrogen (H2) in vehicles is envisaged as a potential replacement to fossil fuels in order to fight against climate change due to carbon di-oxide emissions. Di-hydrogen produced on the basis of renewable energy is considered a reasonable candidate for efficient and clean energy supply. Its high energy per mass unit makes it a possible alternative fuel, in particular for aircrafts.

Liquid di-hydrogen has better energy density than gaseous di-hydrogen while allowing to reduce the mass of the tank required to confine the di-hydrogen within as a result of the lower pressure in liquid state. Liquid di-hydrogen (LH2) at 20 K and 1 bar pressure has a density of 70 g/l compared to the 40 g/l of gaseous di-hydrogen at 88 K and 700 bar. Only cryo-compressed di-hydrogen has a higher density, with a value of 80 g/l at 38 K and 300 bar. According to these parameters, liquefied cryogenic form allows efficient storage at low pressure, and is a viable option for long flight duration aircraft.

In this regards, LH2 cryotanks are considered critical components of future generations of heavy lift launch vehicles, space exploration structures and aircrafts. Developing di-hydrogen storage systems for aircrafts represent an important challenge because of the need for high dormancy times requiring good insulation and low permeation properties, combined with a limited weight.

Composite materials for example, such as carbon fiber-reinforced polymers (CFRP) are considered good candidates to respond to the weight restrictions. However, the behavior of a composite laminate at cryogenic temperatures is prone to produce micro-cracks in the matrix. The root cause is the different thermal expansion coefficients between the matrix and the fibers. Moreover, mechanical tension due to the pressure difference between the inside and the outside of the tank, increases the level of strain and thus, the risk to produce micro-cracks.

There is therefore a need for material testing in view of building cryogenic tanks which will be able to endure multiple cycles of being filled at very high pressures, very low temperatures and with a low permeation to molecules as small as that of H2.

Cryogenic testing of composite materials under tension are currently performed on specimens with cylindrical or semi-spherical shape. The open surfaces of the specimen are closed with pressure caps or plates and tension is created by the injection of a fluid inside the resulting cavity.

Alternatively, document KR 101 399 891 B1 describes a grip apparatus for a cryogenic tensile test.

Manufacturing cylindrical or semi-spherical specimens are more complex and expensive than flat panels. In addition requires specific tools and the assembly of pressure caps. Furthermore, to reproduce the level of strain of a big pressurized LH2 tank in a smaller specimen, it is necessary to reduce the thickness and increase the pressure, so the tests conditions deviates from the real working conditions and the size cannot be as small as would be desired to achieve cryogenic temperature by immersion on a liquefied gas inside of a standard size Dewar.

The invention aims to provide a device and method which allow to conduct tests on material samples without requiring to test a whole tank.

The invention aims to provide a device and method for testing materials which are efficient and cost-effective.

The invention aims to provide a device and method for testing materials which are simple and may be reproduced quickly on a wide variety of materials.

The invention aims to provide a device and method for testing materials which limit the waste of testing material.

The invention aims to provide a device and method that provide a good level of safety for the operators.

The invention proposes a device for testing a material sample comprising:
- a first fastening element adapted to be fixed to a first portion of the material sample,
- a second fastening element adapted to be fixed to a second portion of the material sample,
- the first fastening element and the second fastening element are adapted to be pulled away from each other, up to at least a predetermined distance, called test distance, so as to elongate the material sample,
characterized in that it further comprises:
- an intermediate frame, adapted to be placed along the material sample between the first fastening element and the second fastening element,
- at least a wedge, adapted to be inserted between the intermediate frame and at least one of the first fastening element and second fastening element,
and in that the wedge and the intermediate frame are adapted to maintain said test distance between the first fastening element and the second fastening element against an elastic retraction force exerted by said material sample.

Material samples usually have a rectangular parallelepipedic shape with a length much greater than a width, itself of significant higher dimension than its thickness. The material sample is usually elongated along its length, corresponding to a longitudinal direction. The material sample may for example be CFRP.

The first fastening element and the second fastening element are adapted to be pulled away from each other along a longitudinal direction, up to said test distance, so as to elongate the material sample along said longitudinal direction.

The fastening elements may be of various types. They may comprise clamps, screws, and/or other types of know fixation to be attached to the material sample. The fastening elements may be adapted to be attached each to a longitudinal end of the material sample. The fastening means may be mounting plates.

The intermediate frame is adapted to maintain a distance between the first fastening element and the second fastening element, even upon release of a force that was first applied to pull the first fastening element apart from the second fastening element. In particular the intermediate frame is adapted to minimally deform upon exertion of an elastic retraction force of the material sample. The intermediate frame is made in a material with minimal elastical deformation, so as to maintain the test distance between the first fastening element and the second fastening element.

The wedge may be elastically attached such that the wedge is adapted to be progressively inserted between the intermediate frame and one of the first fastening element and second fastening element when the first fastening element and the second fastening element are pulled apart from each other.

In some embodiments, the wedge may be elastically attached to the intermediate frame such that the wedge is adapted to be progressively inserted between the intermediate frame and one of the first fastening element and second fastening element when the first fastening element and the second fastening element are pulled apart from each other.

In other embodiments, a plurality of wedges, for example two wedges, installed opposite to each other may be elastically attached to each other so as to be displaced towards each other when the jaws formed by the intermediate frame and a fastening elements are pulled apart along a longitudinal direction.

Upon pulling the first fastening element apart from the second fastening element, the distance between them increases. Thereby a gap forms or increases between the intermediate frame and at least one of the first fastening element and second fastening element. The wedge is elastically attached to the intermediate frame so as to be progressively inserted in this gap as the gap widens. The wedge is adapted to maintain the distance between the first fastening element and the second fastening element, even upon release of a force that was first applied to pull the first fastening element apart from the second fastening element. In particular the wedge is adapted to minimally deform upon exertion of an elastic retraction force of the material sample. The wedge is made in a material with minimal elastical deformation, so as to maintain the gap between the intermediate frame and the fastening element.

The intermediate frame may be adapted to let:
- a first portion of a first face of the material sample exposed,
- a second portion of a second face of the material sample, opposite the first portion, exposed.

The first portion and second portion may be opposite along a direction orthogonal to the longitudinal direction. In particular with a material sample having a rectangular shape with a length longer than a width and a width significantly more important that its thickness, as most material probes do, the first portion is a portion of a first main rectangular face while the second portion is part of a second main rectangular face.

Tests may thus be lead between the first face and the second face of the material sample, through openings in the intermediate frame, such as for example permeability tests.

The material of the intermediate frame, wedges and/or fastening elements is selected such that their thermal expansion coefficient allows to minimize modification of the tensioning of the material sample when submitted to high temperature variations.

The intermediate frame may be made in a material having a thermal expansion coefficient of less than 10⁻⁵ m.m⁻¹.K⁻¹.

The intermediate frame may be made in a material having a thermal expansion coefficient of less than 3.10⁻⁶ m.m⁻¹.K⁻¹.

In view of testing the material sample in cryogenic conditions, the thermal expansion coefficient of the frame is beneficially minimal in the range of temperatures used between the deformation of the sample and any test made afterwards in cryogenic conditions.

Similarly, and for the same reasons, the wedge may made in a material having a thermal expansion coefficient of less than 10⁻⁵ m.m⁻¹.K⁻¹.

The intermediate frame may have a closed profile cross-section such that it is adapted to slide along the material sample.

The intermediate frame has a closed profile shape by at least one cross-section by a plane orthogonal to the longitudinal direction. Most material sample have a thin rectangular cross-section, such that in corresponding embodiments of the invention, the intermediate frame may have a rectangular closed profile shape. In particular, each longitudinal end of the intermediate frame may have a rectangular closed profile cross section. Portions of the intermediate frame situated between its longitudinal ends may have an open cross-section in order to leave the main face of the material sample exposed.

The intermediate frame may thus be mounted by sliding the intermediate frame around the material sample along the longitudinal direction. The material sample may thus be introduced through a longitudinal end of the intermediate frame before the corresponding fastening element is mounted to this longitudinal end of the material sample.

A device of the invention may comprise two wedges, each adapted to be introduced between the intermediate frame and one of the first fastening element and second fastening element.

The wedges are adapted to be introduced simultaneously between the intermediate frame and one same fastening element chosen between the first fastening element and the second fastening element. The wedges are adapted to be introduced respectively on opposite lateral sides of the device, so as to maintain a homogeneous longitudinal deformation of the material sample once reached the test distance between the first fastening element and second fastening element.

This feature of the invention avoids for an operator to have his/her hands close to the test sample while tensioning it, thereby reducing the physical danger for the operator.

The invention also extends to a method for testing a material sample comprising two opposite longitudinal ends along a longitudinal direction, which comprises:
- attaching a first fastening element to a first longitudinal end of the material sample,
- sliding a second longitudinal end of the material sample through at least one intermediate frame,
- attaching a second fastening element to the second longitudinal end of the material sample,
- applying a pulling force adapted to pull the first fastening element apart from the second fastening element along the longitudinal direction, so as to deform the material along the longitudinal direction,
- inserting at least one wedge between the intermediate frame and at least one of the first fastening element and second fastening element as the material sample deforms.

The deforming of the material sample may be made in a tensioning machine.

The one or many wedge(s) is(are) inserted progressively as the test sample deforms.

The invention thereby allows to test the permeability of a material while the material is being subject to a tension, at any temperature.

In some embodiments of the invention, the material sample is placed under tension along the longitudinal direction until a predetermined level of microdeformations is obtained in the material sample. The predetermined level of microdeformations is determined based on an expected remaining level of microdeformations once the pulling force is halted and only an elastic reaction force remains in the material sample against the device of the invention.

Microdeformations are related to a state of tension of the material and can be measured by extensometers.

A method of the invention may also comprise a step of halting the application of the pulling force.

When halting the application of the pulling force between the first fastening element and the second fastening element, the material remains under tension and deformed, thanks to the intermediate frame(s) and wedge(s) that maintain the first fastening element and the second fastening element at a constant distance from each other along the longitudinal direction.

A method of the invention may also comprise a step of placing the deformed material sample, together with a device of the invention in cryogenic conditions.

This step comprises placing the material sample, together with the first fastening element, the second fastening element, the intermediate frame, and the wedge in cryogenic conditions. More particularly, this step comprises placing the material sample maintained in a deformed state by the assembly of the first fastening element, the second fastening element, the intermediate frame, and the wedge, all together in cryogenic conditions.

In the frame of this invention, it is considered that cryogenic conditions are reached as soon as the temperature is below 20 Kelvin.

The invention allows to measure the permeability of a sample material to any fluid, under mechanical stress and at any temperature. In some embodiments the material sample may be placed in cryogenic conditions while tensed in a device of the invention. The device of the invention and the sample material are both placed in cryogenic conditions until just before or while the permeability test is conducted.

A method of the invention may also comprise steps of repeatedly placing the deformed material sample together with a device of the invention alternatively in cryogenic conditions and in non-cryogenic conditions.

A method of the invention therefore allows to simulate cycles of alternating temperatures on a material submitted to mechanical stress, with a low temperature being cryogenic and a high temperature being non-cryogenic, that is above 20K, for example an ambient temperature such as 0 degrees Celsius for example. Thereby alternative phases of filling up and emptying a tank of cryogenic fuel may be simulated on a material sample.

In some embodiments, the temperature variation may be applied very quickly, thus creating one or more thermal shock(s) on the material sample. To do so, the material sample in the device of the invention may be instantly plunged in a cryogenic fluid. The invention facilitates such tests as the material sample and the device of the invention may be particularly compact. Thereby the material sample is homogeneously submitted to temperature variations, such that no temperature gradients during thermal stress would affect results of a subsequent permeability test.

In other embodiments it may be desired to apply the temperature variation slowly.

A method of the invention may also comprise steps of testing the permeability of the material sample.

The invention thereby allows to test the permeability of a material under cryogenic conditions and while being subject to a tension. Thereby the behavior of a material of a tank containing cryogenic and pressurized fluids may be evaluated in laboratory conditions and on small material sample instead of having to test a whole tank.

In particular, the intermediate frame may comprise a first opening in regards to a first main face of the material sample and a second opening in regards to a second main face of the material sample, said second opening being opposite the first opening along a direction orthogonal to the longitudinal direction. Thereby the permeability test may be applied between the first main face and the second main face of the material sample, through the openings in the intermediate frame.

Some specific exemplary embodiments and aspects of the invention are described in the following description in reference to the accompanying figures.
Figure 1 is a schematic representation of a top view of an embodiment of a device for testing a material sample according to the invention.
Figure 2 is a schematic representation of a side view of an embodiment of a device according to that of figure 1.
Figure 3 is a schematic representation of a longitudinal section according to a plane A-A indicated on figure 2, of an embodiment of a device according to that of figures 1 and 2.
Figure 4 is a schematic representation of a cross-section according to a plane B-B indicated on figure 2, of an embodiment of a device according to that of figures 1, 2 and 3.
Figure 5 is a schematic representation of a cross-section according to a plane C-C indicated on figure 2, of an embodiment of a device according to that of figures 1, 2, 3 and 4.
Figure 6 is a schematic representation of an embodiment of a method for testing a material sample according to the invention.

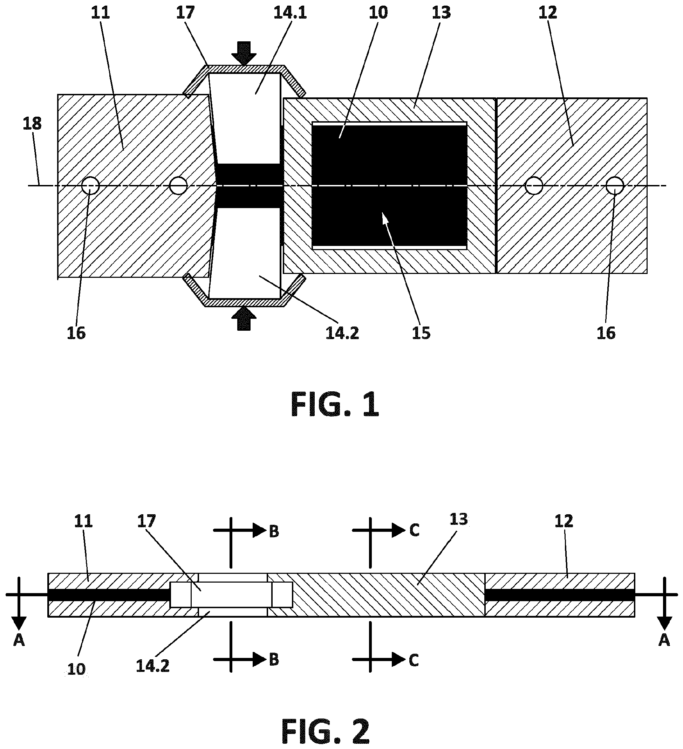

In Figures 1 to 5 a device according to the invention is represented, with a material sample installed within.

The device comprises a first fastening element 11 to which a material sample 10 is fixed. In particular a first longitudinal end of the material sample 10 is attached to the first fastening element 11 by attaching means. In this embodiment, the attaching means are screws 16 traversing the material sample 10.

The material sample 10 has a rectangular parallelepipedic shape with a length much greater than a width, itself of significant higher dimension than its thickness, with two opposed longitudinal ends.

The device also comprises a second fastening element 12 to which the material sample 10 is fixed. A second longitudinal end of the material sample 10 is attached to the second fastening element 12 by attaching means. In this embodiment, the attaching means are screws 16 traversing the material sample 10.

The fastening elements 11, 12 are adapted to be placed in a tensioning so as to be pulled apart from each other along a longitudinal direction 18.

The fastening elements 11, 12 and the attaching means 16 are adapted to elongate a central portion of the material sample 10 situated between the two fastening elements 11, 12 upon pulling the fastening elements 11, 12 apart from each along the longitudinal direction 18.

The device further comprises an intermediate frame 13, placed along the material sample 10 between the first fastening element 11 and the second fastening element 12. The intermediate frame 13 comprises two longitudinal ends each comprising an opening adapted to let the material sample slide through. Moreover, the intermediate frame 13 also comprises openings 15 (or windows) on its two main faces. The openings 15 are at least partially in front of each other such that in an overlap region of the openings 15, when a material sample 10 is installed in the device, there is only the material sample 10 between one side of the device and the other side of the device. In this example the openings 15 have a rectangular shape but it may have any other suitable shape.

These openings 15 allow to place a permeation measurement device with two parts, one of each part on each main face of the material sample in the overlap region of the openings 15. Thereby the invention allows to operate further tests such as a permeation test while the material sample 10 remains submitted to mechanical stress.

Furthermore, the device comprises wedges 14.1, 14.2 placed along the material sample 10 between the first fastening element 11 and the intermediate frame 13. The wedges are placed with a smaller side towards the material sample 10 and a wider side towards the outside of the device. In this embodiment, the device comprises two wedges 14.1, 14.2, but in other embodiments it may comprise one, three, four, etc. In this embodiment, the wedges 14.1, 14.2 are placed between the first fastening element 11 and the intermediate frame 13, however they may symmetrically be placed in other embodiments between the second fastening element 12 and the intermediate frame 13.

The wedges 14.1, 14.2 are adapted to maintain a gap between the first fastening element 11 and the intermediate frame 13. In particular the wedges 14.1, 14.2 are adapted to maintain a gap between the first fastening element 11 and the intermediate frame 13 even when the material sample exerts an elastic retraction force along the longitudinal direction 18 after having been at least partially elastically elongated along the longitudinal direction 18.

In this embodiment, there is one wedge on each lateral side of the material sample 10, such that when the material sample 10 is elongated along the longitudinal direction 18, the wedges maintain equally a right side and a left side of the material sample.

The invention, through the combination of the intermediate frame 13 and one or more wedges 14.1, 14.2 allows to maintain the material sample 10 in an elongated state even once the device is removed from a tensioning machine, such that the material sample 10 can easily be manipulated and placed for example in cryogenic conditions while still being submitted to mechanical stress.

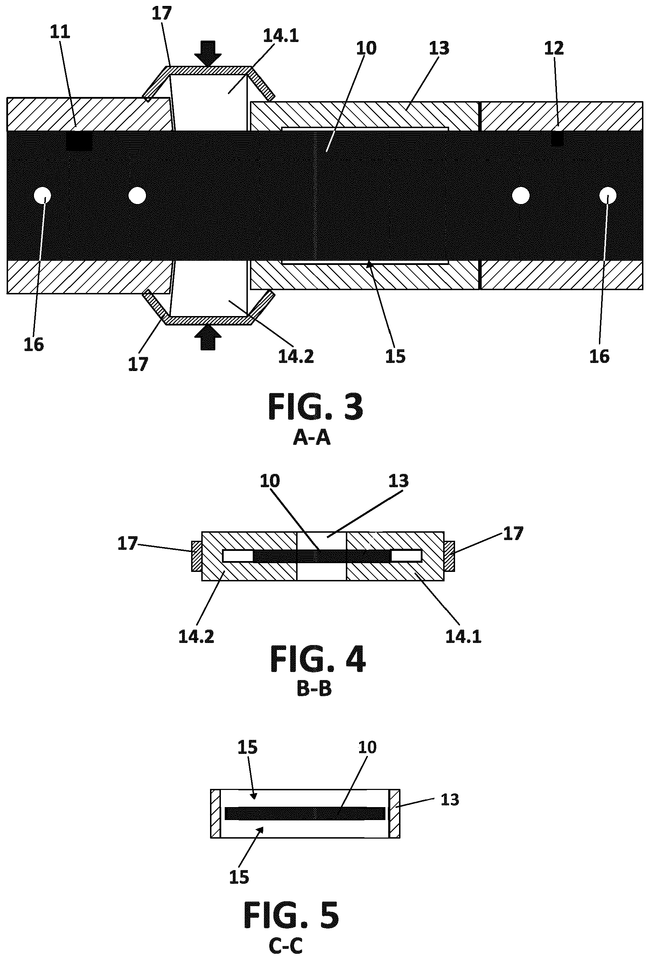

As represented on figure 4 in the section B-B, the wedges 14.1, 14.2 have a cross section adapted to partially encase the material sample 10. In particular, each wedge 14.1, 14.2 has two legs for sliding each on a main face of the material sample, such that the wedges are centered on the material sample and may not be involuntarily ejected towards a direction orthogonal to the main faces of the material sample. The wedges are maintained in position:
- along the longitudinal direction 18 by the first fastening element 11 on one side and by the intermediate frame 13 on the other side,
- along a first direction orthogonal to the longitudinal direction 18, by the elastic means 17,
- along a second direction orthogonal to the first direction and orthogonal to the longitudinal direction 18, by its cross-sectional shape adapted to lean on both faces of the material sample 10.

When, as in the embodiment presented in figures 1 to 5, the wedge has a lateral side towards the second fastening element 12 which is inclined and non-orthogonal to the longitudinal direction, the second fastening element 12 may have a face adapted to be in contact with the wedge which is also non-orthogonal to the longitudinal direction 18 and in the same plane as the side of the wedge. The contact between the wedge and the fastening element is thereby improved. In the present embodiment, the device comprises two wedges, one on each side of the material sample 10, such that the second fastening element 12 has a V-shape towards the wedges 14.1, 14.2.

Similarly, in other embodiments, the faces of the wedge towards the intermediate frame and the face of the intermediate frame adapted to be in contact with the wedge may be in the same plane non-orthogonal to the longitudinal direction.

The device also comprises elastic means 17 mounted with elastic tension before a deformation of the material sample 10. The elastic means 17 elastically attract the wedges towards a gap between the first fastening element 11 and the intermediate frame 13. Thereby, as soon as the material sample 10 is elongated longitudinally, and as the gap widens, the wedges are displaced by the elastic means 17 into the gap so as to maintain the gap open and thus maintain the material sample in its tension state.

As a consequence, in a method according to the invention, an operator does not need to manually displace the wedges into the gap, thereby reducing the risks for the operator.

The elastic means 17 may be attached to the fastening element 11 and/or to the intermediate frame 13. the elastic means 17 may also be otherwise installed, for example in the embodiments presented in the figures with two opposed wedges 14.1, 14.2, the elastic means may simply be placed in elastic tension between one wedge 14.1 and the other wedge 14.2.

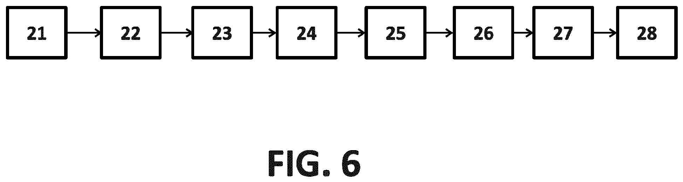

Figure 6 represents an embodiment of a method according to the invention.

In a first step 21, a first longitudinal end of a material sample 10, for example a material sample of CFRP, is inserted in the first fastening element 11 and is attached to the first fastening element 11 by attaching means such as screws 16.

In a second step 22, a second longitudinal end of the material sample 10 is inserted and slid through an intermediate frame 13 until the second longitudinal end of the material sample 10 protrudes from the intermediate frame 13. the length of the intermediate frame 13 is adapted to the length of the material sample 10 such that the material sample 10 is longer than the intermediate frame 13 along the longitudinal direction 18, enough to attach the longitudinal ends of the material sample 10 to the first fastening element 11 and second fastening element 12 with the intermediate frame 13 in between said first fastening element 11 and second fastening element 12.

In a third step 23, the second longitudinal end of the material sample 10 is inserted in the second fastening element 12 is attached to the second fastening element 12 by attaching means such as screws 16.

In a fourth step 24, wedges 14.1, 14.2 may be inserted in a gap left open between the intermediate frame 13 and the second fastening element 12 due to the reduced length to the intermediate frame 13 in comparison to that of the material sample 10. As already described the wedges 14.1, 14.2 may be mounted with elastic means 17 elastically retaining the wedges 14.1, 14.2 towards a center line of the material sample 10 such that the wedges 14.1, 14.2 may be inserted in the widening gap between the intermediate frame 13 and the second fastening element 12 as the first fastening element 11 and the second fastening element 12 are pulled apart from each other along the longitudinal direction 18.

In a fifth step 25, the device is placed in a tensioning machine. The first fastening element 11 and the second fastening element 12 are adapted to be mounted in such tensioning machine. In this step, the first fastening element 11 and the second fastening element 12 are pulled apart from each other along the longitudinal direction 18, until a predefined tensioning state of the material sample 10 is attained. During this step, the wedges 14.1, 14.2 are inserted in the widening gap between the intermediate frame 13 and the second fastening element 12.

Steps 24 and 25 may be inverted, in particular when there is no gap or a significantly small gap between the intermediate frame 13 and the second fastening element 12 before the first fastening element 11 and the second fastening element 12 are pulled apart such that the wedges may not be installed in the gap. However it is considered safer to design the device with a gap before the pulling step, such that the wedges 14.1, 14.2 may be inserted and mounted before any tension is applied to the material sample 10, thereby reducing the risk for an operator.

In a sixth step 26, the tensioning applied by the tensioning machine is released. The tensioning state of the material sample 10 is however maintained by the intermediate frame 13 and the wedges 14.1, 14.2 placed against each other in longitudinal abutment between the first fastening element 11 and the second fastening element 12.

In a seventh step 27, the material sample 10 and the device are placed in cryogenic conditions, for example by being immersed in a cryogenic liquid, for example in a Dewar. The material sample 10 may be immersed for a predetermined duration in order to ensure that a given temperature is reached.

Step 27 may be repeated multiple times, with additional intermediate step(s) of placing the material sample at non-cryogenic temperature in between - for example at an ambient temperature such as 0 degrees Celsius - so as to simulate cycles of cryogenic thermal stress on the material.

In an eighth step 28, the material sample 10 is submitted to a permeation test by applying the nozzles of a permeation testing device on the material sample, through the openings 15 of the intermediate frame 13.

The permeation test may be made at cryogenic or non-cryogenic temperatures.

The invention thereby allows to test permeation of a material sample 10 in cryogenic conditions and submitted to a mechanical stress in a simple and economical manner, using common devices.

The invention is not limited to the specific embodiments herein disclosed as examples. The invention may also encompass other embodiments not herein explicitly described, as long as they fall within the scope of the appended claims.

## Claims

1. Device for testing a material sample (10) comprising:
- a first fastening element (11) adapted to be fixed to a first portion of the material sample,
- a second fastening element (12) adapted to be fixed to a second portion of the material sample,
- the first fastening element (11) and the second fastening element (12) are adapted to be pulled away from each other, up to at least a predetermined distance, called test distance, so as to elongate the material sample,
**characterized in that** it further comprises:
- an intermediate frame (13), adapted to be placed along the material sample between the first fastening element (11) and the second fastening element (12),
- at least a wedge (14.1, 14.2), adapted to be inserted between the intermediate frame (13) and at least one of the first fastening element (11) and second fastening element (12),
and **in that** the wedge (14.1, 14.2) and the intermediate frame (13) are adapted to maintain said test distance between the first fastening element (11) and the second fastening element (12) against an elastic retraction force exerted by said material sample.

2. Device according to claim 1, further **characterized in that** the wedge (14.1, 14.2) is elastically attached such that the wedge (14.1, 14.2) is adapted to be progressively inserted between the intermediate frame (13) and one of the first fastening element (11) and second fastening element (12) when the first fastening element (11) and the second fastening element (12) are pulled apart from each other.

3. Device according to any of claim 1 or 2, further **characterized in that** the intermediate frame (13) is adapted to let:
- a first portion of a first face of the material sample exposed,
- a second portion of a second face of the material sample, opposite the first portion, exposed.

4. Device according to any of claim 1 to 3, further **characterized in that** the intermediate frame (13) is made in a material having a thermal expansion coefficient of less than 10⁻⁵ m.m⁻¹.K⁻¹.

5. Device according to any of claim 1 to 4, further **characterized in that** the intermediate frame (13) has a closed profile cross-section such that it is adapted to slide along the material sample.

6. Device according to any of claim 1 to 5, further **characterized in that** it comprises two wedges (14.1, 14.2), each adapted to be introduced between the intermediate frame (13) and one of the first fastening element (11) and second fastening element (12).

7. Method for testing a material sample (10) comprising two opposite longitudinal ends along a longitudinal direction (18), which comprises:
- attaching a first fastening element (11) to a first longitudinal end of the material sample,
- sliding a second longitudinal end of the material sample through at least one intermediate frame (13),
- attaching a second fastening element (12) to the second longitudinal end of the material sample,
- applying a pulling force adapted to pull the first fastening element (11) apart from the second fastening element (12) along the longitudinal direction (18), so as to deform the material along the longitudinal direction (18),
- inserting at least one wedge (14.1, 14.2) between the intermediate frame (13) and at least one of the first fastening element (11) and second fastening element (12) as the material sample deforms.

8. Method according to claim 7, further **characterized in that** it comprises:
- halting the application of the pulling force.

9. Method according to one of claim 7 or 8, further **characterized in that** it comprises:
- placing the deformed material sample together with a device according to any of claim 1-6 in cryogenic conditions.

10. Method according to claim 8, further **characterized in that** it comprises:
- repeatedly placing the deformed material sample together with the device according to any of claim 1-6 alternatively in cryogenic conditions and in non-cryogenic conditions.

11. Method according to one of claim 7 to 10, further **characterized in that** it comprises:
- testing the permeability of the material sample.

## Revendications

1. Dispositif de test d'un échantillon de matériau (10) comprenant :
- un premier élément de fixation (11) adapté pour être fixé à une première portion de l'échantillon de matériau,
- un deuxième élément de fixation (12) adapté pour être fixé à une deuxième portion de l'échantillon de matériau,
- le premier élément de fixation (11) et le deuxième élément de fixation (12) sont adaptés pour être éloignés l'un de l'autre jusqu'à au moins une distance prédéterminée, appelée distance d'essai, de manière à allonger l'échantillon de matériau,
**caractérisé en ce qu'**il comporte en outre :
- un cadre intermédiaire (13), adapté pour être placé le long de l'échantillon de matériau entre le premier élément de fixation (11) et le deuxième élément de fixation (12),
- au moins une cale (14.1, 14.2), adaptée pour être insérée entre le cadre intermédiaire (13) et au moins l'un des premier (11) et deuxième (12) éléments de fixation,
et **en ce que** la cale (14.1, 14.2) et le cadre intermédiaire (13) sont adaptés pour maintenir ladite distance d'essai entre le premier élément de fixation (11) et le deuxième élément de fixation (12) à l'encontre d'une force de rétraction élastique exercée par ledit échantillon de matériau.

2. Dispositif selon la revendication 1, **caractérisé en outre en ce que** la cale (14.1, 14.2) est fixée de manière élastique de sorte que la cale (14.1, 14.2) est adaptée pour être insérée progressivement entre le cadre intermédiaire (13) et l'un des premier élément de fixation (11) et deuxième élément de fixation (12) lorsque le premier élément de fixation (11) et le deuxième élément de fixation (12) sont éloignés l'un de l'autre.

3. Dispositif selon l'une quelconque des revendications 1 ou 2, **caractérisé en outre en ce que** le cadre intermédiaire (13) est adapté pour laisser :
- une première portion d'une première face de l'échantillon de matériau exposée,
- une deuxième portion d'une deuxième face de l'échantillon de matériau, opposée à la première portion, exposée.

4. Dispositif selon l'une quelconque des revendications 1 à 3, **caractérisé en outre en ce que** le cadre intermédiaire (13) est réalisé dans un matériau présentant un coefficient de dilatation thermique inférieur à 10⁻⁵ m.m⁻¹.K⁻¹.

5. Dispositif selon l'une quelconque des revendications 1 à 4, **caractérisé en outre en ce que** le cadre intermédiaire (13) présente une section à profil fermé de sorte qu'il est adapté pour coulisser le long de l'échantillon de matériau.

6. Dispositif selon l'une quelconque des revendications 1 à 5, **caractérisé en outre en ce qu'**il comprend deux cales (14.1, 14.2), chacune étant adaptée pour être introduite entre le cadre intermédiaire (13) et l'un des premier (11) et deuxième (12) éléments de fixation.

7. Procédé de test d'un échantillon de matériau (10) comprenant deux extrémités longitudinales opposées selon une direction longitudinale (18), qui comprend :
- la fixation d'un premier élément de fixation (11) à une première extrémité longitudinale de l'échantillon de matériau,
- le coulissement d'une deuxième extrémité longitudinale de l'échantillon de matériau à travers au moins un cadre intermédiaire (13),
- la fixation d'un deuxième élément de fixation (12) à la deuxième extrémité longitudinale de l'échantillon de matériau,
- l'application d'une force de traction adaptée pour éloigner le premier élément de fixation (11) du deuxième élément de fixation (12) selon la direction longitudinale (18), de manière à déformer le matériau selon la direction longitudinale (18),
- l'insertion d'au moins une cale (14.1, 14.2) entre le cadre intermédiaire (13) et au moins l'un des premier (11) et deuxième (12) éléments de fixation à mesure que l'échantillon de matériau se déforme.

8. Procédé selon la revendication 7, **caractérisé en outre en ce qu'**il comprend :
- l'arrêt de l'application de la force de traction.

9. Procédé selon l'une des revendications 7 ou 8, **caractérisé en outre en ce qu'**il comprend :
- le placement de l'échantillon de matériau déformé avec un dispositif selon l'une quelconque des revendications 1 à 6 dans des conditions cryogéniques.

10. Procédé selon la revendication 8, **caractérisé en outre en ce qu'**il comprend :
- le placement répété de l'échantillon de matériau déformé avec le dispositif selon l'une quelconque des revendications 1 à 6 alternativement dans des conditions cryogéniques et dans des conditions non cryogéniques.

11. Procédé selon l'une quelconque des revendications 7 à 10, **caractérisé en outre en ce qu'**il comprend :
- le test de perméabilité de l'échantillon de matériau.

## Patentansprüche

1. Vorrichtung zum Prüfen einer Materialprobe (10), die Folgendes umfasst:
- ein erstes Befestigungselement (11), das dazu ausgelegt ist, an einem ersten Abschnitt der Materialprobe befestigt zu werden,
- ein zweites Befestigungselement (12), das dazu ausgelegt ist, an einem zweiten Abschnitt der Materialprobe befestigt zu werden,
- wobei das erste Befestigungselement (11) und das zweite Befestigungselement (12) dazu ausgelegt sind, bis zu mindestens einem vorbestimmten Abstand, der als Prüfabstand bezeichnet wird, voneinander weggezogen zu werden, um die Materialprobe zu verlängern,
**dadurch gekennzeichnet, dass** sie ferner Folgendes umfasst:
- einen Zwischenrahmen (13), der dazu ausgelegt ist, entlang der Materialprobe zwischen dem ersten Befestigungselement (11) und dem zweiten Befestigungselement (12) platziert zu werden,
- mindestens einen Keil (14.1, 14.2), der dazu ausgelegt ist, zwischen dem Zwischenrahmen (13) und mindestens einem von dem ersten Befestigungselement (11) und dem zweiten Befestigungselement (12) eingesetzt zu werden,
und dass der Keil (14.1, 14.2) und der Zwischenrahmen (13) dazu ausgelegt sind, den Prüfabstand zwischen dem ersten Befestigungselement (11) und dem zweiten Befestigungselement (12) gegen eine von der Materialprobe ausgeübte elastische Rückzugskraft aufrechtzuerhalten.

2. Vorrichtung nach Anspruch 1, ferner **dadurch gekennzeichnet, dass** der Keil (14.1, 14.2) elastisch so angebracht ist, dass der Keil (14.1, 14.2) dazu ausgelegt ist, progressiv zwischen dem Zwischenrahmen (13) und einem von dem ersten Befestigungselement (11) und dem zweiten Befestigungselement (12) eingesetzt zu werden, wenn das erste Befestigungselement (11) und das zweite Befestigungselement (12) voneinander weggezogen werden.

3. Vorrichtung nach Anspruch 1 oder 2, ferner **dadurch gekennzeichnet, dass** der Zwischenrahmen (13) dazu ausgelegt ist, Folgendes zuzulassen:
- dass ein erster Abschnitt einer ersten Fläche der Materialprobe freigelegt wird,
- dass ein zweiter Abschnitt einer zweiten Fläche der Materialprobe gegenüber dem ersten Abschnitt freigelegt wird.

4. Vorrichtung nach einem der Ansprüche 1 bis 3, ferner **dadurch gekennzeichnet, dass** der Zwischenrahmen (13) aus einem Material mit einem thermischen Ausdehnungskoeffizienten von weniger als 10⁻⁵ m.m⁻¹.K -1 hergestellt ist.

5. Vorrichtung nach einem der Ansprüche 1 bis 4, ferner **dadurch gekennzeichnet, dass** der Zwischenrahmen (13) einen geschlossenen Profilquerschnitt aufweist, so dass er dazu ausgelegt ist, entlang der Materialprobe zu gleiten.

6. Vorrichtung nach einem der Ansprüche 1 bis 5, ferner **dadurch gekennzeichnet, dass** sie zwei Keile (14.1, 14.2) umfasst, die je dazu ausgelegt sind, zwischen dem Zwischenrahmen (13) und einem von dem ersten Befestigungselement (11) und dem zweiten Befestigungselement (12) eingeführt zu werden.

7. Verfahren zum Prüfen einer zwei gegenüberliegende Längsenden entlang einer Längsrichtung (18) umfassenden Materialprobe (10), das Folgendes umfasst:
- Anbringen eines ersten Befestigungselements (11) an einem ersten Längsende der Materialprobe,
- Schieben eines zweiten Längsendes der Materialprobe durch mindestens einen Zwischenrahmen (13),
- Anbringen eines zweiten Befestigungselements (12) an dem zweiten Längsende der Materialprobe,
- Ausüben einer Zugkraft, die dazu ausgelegt ist, das erste Befestigungselement (11) entlang der Längsrichtung (18) von dem zweiten Befestigungselement (12) wegzuziehen, um das Material entlang der Längsrichtung (18) zu verformen,
- Einsetzen mindestens eines Keils (14.1, 14.2) zwischen dem Zwischenrahmen (13) und mindestens einem von dem ersten Befestigungselement (11) und dem zweiten Befestigungselement (12), wenn sich die Materialprobe verformt.

8. Verfahren nach Anspruch 7, ferner **dadurch gekennzeichnet, dass** es Folgendes umfasst:
- Unterbrechen der Ausübung der Zugkraft.

9. Verfahren nach einem der Ansprüche 7 bis 8, ferner **dadurch gekennzeichnet, dass** es Folgendes umfasst:
- Platzieren der verformten Materialprobe zusammen mit einer Vorrichtung nach einem der Ansprüche 1-6 unter kryogenen Bedingungen.

10. Verfahren nach Anspruch 8, ferner **dadurch gekennzeichnet, dass** es Folgendes umfasst:
- wiederholtes Platzieren der verformten Materialprobe zusammen mit der Vorrichtung nach einem der Ansprüche 1-6 alternativ unter kryogenen Bedingungen und unter nicht kryogenen Bedingungen.

11. Verfahren nach einem der Ansprüche 7 bis 10, ferner **dadurch gekennzeichnet, dass** es Folgendes umfasst:
- Prüfen der Permeabilität der Materialprobe.
